# EUROPEAN PATENT APPLICATION

(11) **EP 2 631 866 A1**
(43) Date of publication of application: **28.08.2013**
(21) Application number: 13397502.9
(22) Date of filing: 21.02.2013
(51) Int. Cl.: G06Q 40/08

(54) **A method for determining the risk of forest destruction, and a method for forest management**

(30) Priority: 23.02.2012 FI 20125205
(71) Applicant: UPM-Kymmene Corporation, 00130 Helsinki (FI)
(72) Inventor: Brander, Sauli, 36120 Suinula (FI)
(74) Representative: Tampereen Patenttitoimisto Oy

(57) **Abstract**

A method for determining the risk of forest destruction of a forest property (100), wherein the forest property (100) comprises at least a first patch (200) and a second patch (200). In the method, forest resource data is collected, for example, by airborne laser scanning, by aerial photography, and/or by observing and entering in a database. In the method, a first risk event is selected to be examined. Furthermore, on the basis of the forest resource data, the risk of forest destruction of the first patch (200) and the risk of forest destruction of the second patch (200) are determined, relating to a selected risk event. Furthermore, the risk of forest destruction of the forest property (100) is determined by applying the risk of forest destruction of the first patch (200) and the risk of forest destruction of the second patch (200).

## Description

### Field of the invention

The invention relates to a method for determining the risk of forest destruction. Forest refers particularly to the stand of trees on forest land. The invention also relates to a method for forest management, a method for routing forestry equipment, a method for optimizing the quantity of forestry equipment, and a method for determining the insurance premium for forest property. The invention also relates to a computer program for determining the risk of forest destruction.

### Background of the invention

Sustainable forest development and deployment require appropriate forest management. Forest owners may have various forestry plans suitable for their individual needs. A forestry plan is used to secure appropriate growth and development of a forest. By means of the forestry plan, it is possible, for example, to try to secure the economic production capacity of the forest, including long-term harvesting, recreational use of the forest, or the protection of certain local plant or animal species. The economic production capacity may refer to an increase in the value of the forest, the quantity of timber to be sold, or the quantity of timber to be used. Timber can be used, for example, as sawn timber, for pulp or paper manufacture, or for energy.

According to the state of art, risks relating to forest ownership can be managed by insurance. According to the state of art, the risk of forest destruction is evaluated on the basis of the surface area to determine the insurance premium for the whole forest property. When the surface area of the forest property is known, the risk of forest destruction can be determined according to the property. The risk determined in this way is very inaccurate.

### Brief summary of the invention

It is an aim of the present invention to provide a method for determining the risk of forest destruction. The risk of forest destruction, determined more accurately than in the state of art, can be utilized largely in forest management. The invention further relates to a method for forest management, in which said risk is utilized. By taking the risk into account, forest tending measures can be scheduled better to secure the economic production capacity of the forest.

In a good forestry plan, risk events related to forest management, particularly risks of forest destruction, are taken into account. In view of forest management, risk events include, for example, windfalls caused by storms, forest fires, fungal decay, damage caused by insects, and other damage caused by animals. The occurrence of a risk event requires forest tending measures, such as harvesting and/or planting of trees, as well as transportation of forestry equipment required for taking the measures. At times, part of the stand is left totally unharvested because of poor terrain passability. In this case, it is also important to know the value of the damage.

It is another aim of the invention to determine the risk of forest destruction patch by patch. A patch refers to a part of a forest property. The term forest patch can also be used. A forest property refers to a limited area with growing stock. The patch-specific risk of destruction can be applied in drawing up a forestry plan, wherein for example the risk of destruction of the stand on a given patch may influence the forestry plan of an adjacent patch. When determining the patch-specific risk, it is possible to utilize a database on forest assets and/or technical measuring instruments. The patch-specific risk can be utilized in the forest management, for example when making decisions on tending measures. The patch-specific risk can be utilized in the optimization of the location of forestry equipment. The patch-specific risk can be utilized in the insurance of the forest property.

The method according to the invention for determining the risk of destruction of at least a first patch of a forest property is characterized in what is presented in the independent claim 1.

The method according to the invention for determining the risk of destruction of the stand of a forest property is characterized in what is presented in the dependent claim 7.

The method according to the invention for determining the insurance premium of a forest property is characterized in what is presented in the dependent claims 9 and 10.

The method for forest management according to the invention is characterized in what is presented in the dependent claim 11.

The method for routing forestry equipment according to the invention is characterized in what is presented in the dependent claim 13.

The method for optimizing the quantity of forestry equipment according to the invention is characterized in what is presented in the dependent claim 14.

The computer program according to the invention is characterized in what is presented in the independent claim 15.

The computer software product according to the invention is characterized in what is presented in the independent claim 16.

Other features of the method according to the invention are presented in the dependent claims 2 to 6, 8, and 12.

### Description of the drawings

In the following, the invention will be described in more detail with reference to the appended drawings. The drawings illustrate the invention. In the drawings,
- Fig. 1a: shows a forest property,
- Fig. 1b: shows various stages of a growing stand,
- Fig. 1c: illustrates the cycle of forest growth and regeneration,
- Fig. 2: shows a forest property divided into patches,
- Fig. 3a: shows the patch-specific risk of destruction of a forest property, and
- Fig. 3b: shows those patches of the forest property of Fig. 3a for which the risk of destruction exceeds a risk threshold.

### Detailed description of the invention

Forest land is an asset that is used as a source of livelihood, as an investment, for commercial activity, as well as for recreational and multi-purpose use. Factors influencing the value of forest land include the value of the soil and the stand, as well as the location of the forest. The location influences the value of forest land through, for example, demand and supply.

The price of forest land varies from EUR 250 to 18,000 per hectare, in terms of forest economic values. Forest economic values include the value of the soil, the value of the stand, and the present value of the future growth of the stand. The present value of the future growth is determined on the basis of the stage of development of the forest. A young forest has a high present value of future growth in relation to the value of the stand, because a lot of capital has been invested in the forestation, and the income from harvesting will be years away. For an older forest, the value of the stand is high, the income from harvesting is closer, and the forest property can be realized more easily by harvesting.

In addition to forest economic values, cultural values may be involved in forest land. For example, a given landscape may be considered valuable in terms of cultural history. Cultural values are typically difficult to be defined in terms of money.

In this description, the term forest land refers to land (soil) on which a forest is growing, has grown, or is expected to grow in the future. A forest refers particularly to the stand of trees growing on forest land. A forest property refers to a limited area that comprises forest land. The forest property may belong to, for example, a certain single owner. The ownership of the forest property is not relevant for the invention. The forest property may be divided into several patches, and in this description a forest patch, *i.e.* a patch, refers to a part of a forest property. The patch may also comprise the whole forest property.

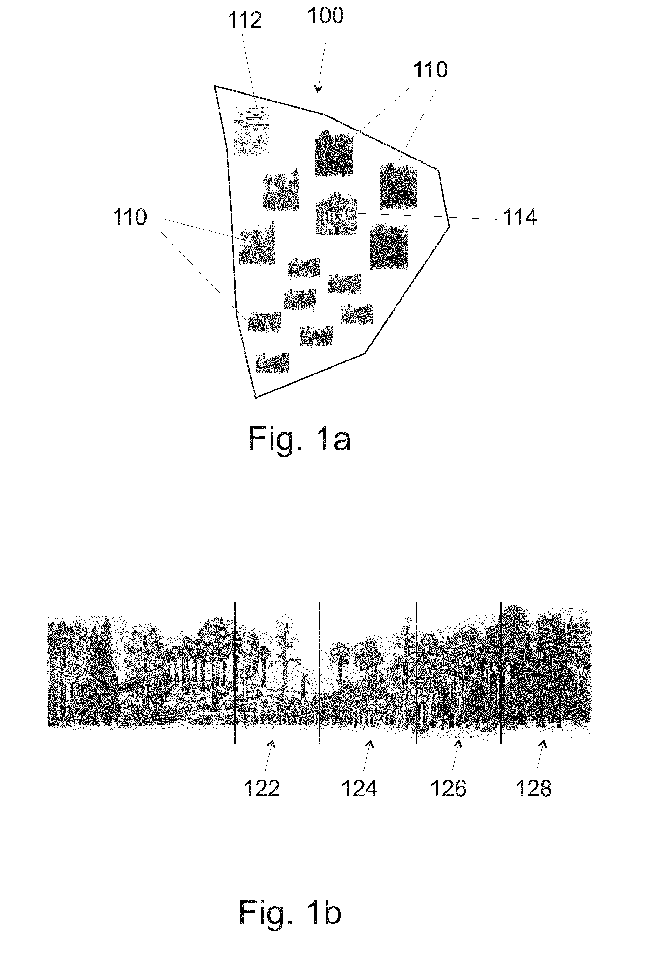

Figure 1a shows a forest property 100. Forest is growing, has grown, or is expected to grow in the future on the forest property 100, at least some part 110 of it. The forest property 100 may be a part of a larger estate that also comprises residential and arable land areas. The forest property 100 refers to a surface area where forest is growing, if possible. The forest property 100 can be used for forestry, where possible. The forest property 100 may comprise ponds where it is not possible to grow trees. The forest property 100 may comprise rocks which may be difficult to use for forestry, because trees grow poorly on a rock, or the harvesting may be very difficult. The forest property 100 may comprise wetlands 112 which may be difficult to use for forestry, for similar reasons. Part of the wetlands 112 may be areas which are conserved for environmental reasons. The forest property 100 may comprise residential or arable land areas which are not used for forestry.

The forest property 100 may comprise wooded areas 110. The forest property 100 may comprise areas 114 in which regeneration cutting has been recently carried out, wherein primarily seed trees grow very sparsely in these areas 114, but these areas have been, can be and will be used for forestry.

Climatic change is expected to increase forest destruction in Finland. Milder winters and increased rainfall may set the scene for an increase in fungal forest destruction. A humid microclimate promotes the growth and sporulation of fungi. Even if rainfall increased slightly in the summer as well, an increase in evaporation caused by a temperature rise may still result in an increase in dry periods stressing the vegetation. It is possible that aridity stress caused by periods of hot weather becomes more common in dry moorlands and rocky forest patches in Southern Finland, exposing trees to pathogenic fungi as well. Damage caused by insects may also increase because of a temperature rise and periods of exceptional dryness in the summer. The effect of climatic change on damage caused by mammals, in turn, is remarkable and most difficult to evaluate. Risks of forest fire and damage caused by storms are estimated to increase as extreme phenomena become more common. In the 20^{th} century, at an average interval of ten years, storms occurred in Finland that toppled and damaged a considerable quantity of growing timber (1.0 to 10 million m³).

An aim of the forestry plan of the forest property 100 is to secure the economic production capacity of the forest, including the growth and/or harvesting of the stand (growing timber) in the long term. Forestry involves potential risk events which cause destruction of the forest. Examples of risk events include damage caused by storms, forest fires, damage caused by snow, decay caused by fungi, damage caused by insects, damage to roots and trunks caused by rodents, and damage to tops and branches caused by elks and deer. In some contexts, the risk refers to the negative risk, *i.e.* the probability of an unwanted event (risk event). Furthermore, the risk is normally evaluated in relation to time. For example, how many risk events occur on average in a year, or within what period one risk event occurs on average.

In this description, a risk event refers to an event that causes destruction of a forest. In the case of the forest, the risk event does not necessarily destroy the whole forest but only part of the stand in a given area. On the basis of this, it is possible to calculate an expected value for the quantity of timber (stand) that is destroyed on a forest property in a time unit (for example, a year). By means of the quantity, it is also possible to calculate an expected value for the monetary value of the destroyed timber. In this description, a risk refers to the expected value of the economic loss caused by an occurred risk event in a time unit. The economic loss is influenced by not only the decrease in the value of the forest (due to the destroyed forest and the reduced expectations for the future) but also the costs for repairing the damage as well as the possible sales returns obtained from harvesting of timber. Furthermore, the reduction in the value is influenced by the quantity of timber destroyed by the risk event if it occurs. Consequently, the risk unit is monetary units per a time unit, for example euros per year (€/a).

The risk may refer to the risk of forest destruction that only relates to a given risk event. Thus, the risk refers to the expected value of the economic loss caused by this risk event in the time unit. For example, it may only refer to the risk of forest fire, which risk is not influenced by damage caused by storms. A thunderstorm may cause both windfalls and forest fires, which influences the risk relating to forest fires as such, but the windfalls and the forest fire cause different economic losses, wherein it is possible to look at, for example, the expected value for the economic loss relating to the forest fire only, that is, the risk relating to the forest fire. The risk may refer to a risk relating to several risk events, that is, the expected value of an economic loss caused by the occurrence of at least one risk event, when there are several possible risk events. For example, it can refer to the risk of forest destruction in general, when the destruction may be caused by a forest fire, a storm, or animals. The risk is not calculated in relation to the surface area, unless specified otherwise. The risk may refer to a risk relating to a given risk event, a risk relating to selected risk events, or the total risk relating to all potential risk events.

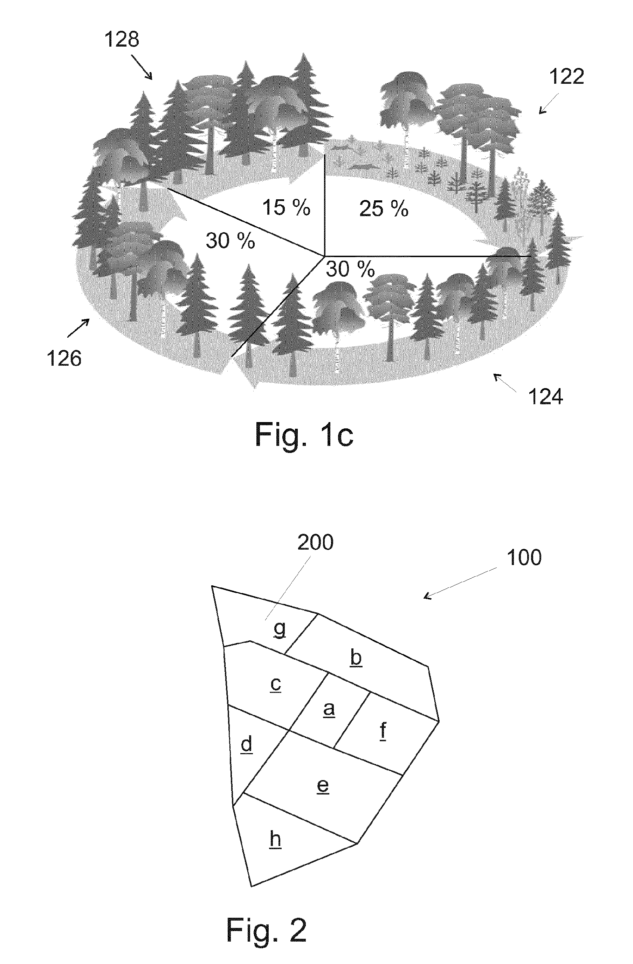

The risk may relate to the destruction of the stand on a given part, such as a given patch 200 (Fig. 2), of the forest property 100. It is thus possible to talk about the risk of forest destruction of the patch. More briefly, in this description, it is also possible to talk about the risk of the patch, which refers to the risk of forest destruction of the patch. The term risk, as such, has been defined above.

The risk probability refers to the probability of occurrence of a risk event in a time unit (for example, a year). It is obvious that defined in this way, the risk of a large property is higher than that of a smaller property. Furthermore, it should be understood that the risk relating to a mature forest per surface area may be higher than the risk relating to a young forest per surface area, because the mature forest contains more timber (m³/ha), and the value of the timber (€/m³) may be higher in the mature forest than in the young forest. The risk probability relates to a risk event, and the unit of risk probability is, for example, number of events per year (1/a). Furthermore, in evaluating the risk, it may be useful to have information on the quantity of timber (m³) destroyed by the risk event if occurring, as well as the price of timber (€/m³).

Figure 1 b shows different stages of a growing forest. After regeneration cutting, a seedling stand 122 is planted, or seeds of pine or birch are sown in the forest land. Typically, the value of the seedling stand 122 is, for example, about 800 to 1,100 €/ha. Typically, in a seedling stand 122 the risk is relatively high and the risk probability is very high, particularly for damage caused by animals (moles, elks and deer) and insects (pine weevil, eight-dentated bark beetle). In such damage caused by mammals and insects, the insect or other animal eats bark or outgrowths on the tree and causes the death or a partial value loss of the tree.

The seedling stand 122 will grow, wherein the forest will become a young growing forest 124. Typically, the value of the young growing forest 124 is, for example, about 2,500 €/ha. Typically, the risk in a young growing forest 124 is relatively low, because the risk probability is moderate and the value of the forest is relatively low.

The young growing forest 124 will grow, wherein the forest will become a mature growing forest 126. Typically, the value of the mature growing forest 126 is, for example, about 6,000 €/ha. Typically, the risk in a mature growing forest 126 is relatively high, because the risk probability is moderate and the value of the forest is relatively high. The risk probability is relatively high for damage caused by, for example, insects. In damage caused by insects, a population eats the bark, roots or needles of the tree and causes the death, a growth loss or a partial value loss of the tree. Damage caused by insects occur in other stages of development of the forest as well.

The mature growing forest 126 will grow, wherein the forest will become a forest 128 mature for regeneration felling. Typically, the value of the forest 128 mature for regeneration felling is, for example, about 12,000 €/ha. Typically, the risk in a forest 128 mature for regeneration felling is high, because the risk probability is moderate and the value of the forest is high.

Figure 1c illustrates the process of forest regeneration in a cycle. A seedling stand 122 is grown to a young growing stand 124. The young growing stand 124 is grown to a mature growing stand 126. The mature growing stand 126 is grown to a forest 128 mature for regeneration felling. The forest 128 mature for regeneration felling is regenerated to a seedling stand 122 by means of regeneration felling, cultivation of soil, and planting or sowing. Figure 1 c also shows the typical percentage portions of the surface areas of forests in different stages. The portions of the surface areas may vary significantly according to the forest property, particularly if the property is small and/or all its patches are in the same stage. The forest property 100 may be heterogeneous in its forest type. The forest property may comprise growing timber in all said different stages. Thus, the whole property cannot be managed in a homogeneous manner. It is also difficult to evaluate the risk relating to the whole property.

With reference to Fig. 2, in an embodiment of the invention, the forest property 100 has been or is divided into patches 200, *i.e.* forest patches. A patch 200 refers to a part of the forest property 100 that is homogeneous or relatively homogeneous in its soil and stand of trees (main tree species, stage of growth, density of trees). Thus, the forest management can be planned in a patch specific way, because the same forest tending measures can be carried out in the whole area of each patch. Correspondingly, the risk for each patch can be determined more accurately, because the stand on each patch is homogeneous. In particular, the stand on each patch 200 is more homogeneous than the stand on the whole forest property 100. In Fig. 2, the different patches 200 also denoted with the letters a, b, c, d, e, f, g, and h.

The patch 200 normally comprises trees in the same stage of growth. The size of the patches may be, for example, 0.5 to 2.5 ha. The average size of a patch in a forest property owned by a Finnish family is about 1.3 ha. In the method, the forest property 100 comprises at least one patch 200. The forest property 100 may be divided into two or more patches 200. The forest property 100 can be divided into the patches 200 by determining the quality of the soil and the quality of the stand according to the location. A patch 200 can be defined as an area where the deviation in the soil quality from a first reference value and the deviation in the timber quality from a second reference value are below predetermined levels. The first and second reference values can be, for example, the average subtracted by a tolerance, for example the standard deviation. The reference value can be selected, for example, on the basis of a point, such as the centre, of the patch 200. The reference value can be changed when determining the location for the border of the patch. For example, when the border is moved, the average and the standard deviation for the patch, relating to *e.g*. the density of the stand, can be redefined to correspond to the changed area of the patch. When defining the patches 200, it is possible to utilize known methods. For example, airborne laser scanning (ALS) can be used for automatically determining the stand of the property 100. Aerial photographs can also be utilized in defining the patches. In many cases, the forest property 100 can be divided into the patches 200 for reasons of forest management. The forestry plan for the forest property 100 may be patch specific, wherein a patch-specific forestry plan can be defined for each patch 200.

The risk of destruction of the stand on the patch 200 is always influenced by some, in many cases by all, of the following factors:
- the stage of growth of the stand on said patch (from the seedling stand 122 up to the stand 128 mature for regeneration felling),
- the surface area of said patch,
- the main tree species on said patch,
- the location of said patch,
- the stand of trees on the area/patch adjacent to said patch,
- the measures taken or events occurred on said patch,
- the measures taken or events occurred on the area/patch adjacent to said patch,
- the slope of said patch,
- the altitude of said patch from the sea level, and
- the soil of said patch.

The stage of growth (class of development) of the stand influences the risk primarily because of the value of the stand. The surface area of said patch influences the magnitude of the risk, because more timber can be destroyed on a large patch 200 than on a small one. The main tree species on the patch influences the risk, because the monetary value of different tree species is different. Furthermore, the main tree species influences the risk, because different tree species are variably susceptible to different risk events, such as damage caused by fungi, damage caused by insects, damage caused by storms, other damage caused by animals, and damage caused by snow. By means of the location of the patch 200, it is possible to estimate risk probabilities. For example, the risk of damage caused by storms is higher in coastal areas than inland. Such information has been collected in wind maps and wind atlases, for estimating the risk of damage caused by storms in given areas. Furthermore, in given grasslands, the probability of damage caused by elks and deer can be known to be higher than in other areas.

Moreover, a nearby area close to said patch 200 (for example a) will influence the risk of said patch. The nearby area may be an adjacent area or an adjacent patch (for example, b, c, d, e, or f). The nearby area may also extend farther from the directly adjacent patch, for example to the patch g or h. The stand of trees in the nearby area will influence, for example, the probability of damage caused by a storm. For example, if there is no stand of trees in the area b, or the stand consists of small trees, the patch b does not protect the stand of the patch a from damage caused by a storm. Measures taken in said nearby area (for example patch b) influence the risk of said patch (for example a) *e.g*. in such a way that thinning of the stand in the nearby area increases the risk of damage caused by a storm on said patch. Events, such as damage caused by storms or snow, in nearby areas (*e.g*. patch b) may increase the risk of damage caused by insects or the risk of damage caused by storms on said patch (*e.g*. a).

Forests in which thinning has been recently carried out or which are border forests for a forest subjected to regeneration felling, are particularly susceptible to damage caused by storms. A tree will react to thinning by growing a green top and roots in the ground. However, the growing of the roots takes years even in the best soil, so that after the thinning, the stand is exposed to a higher wind load and there are fewer trees to support each other. Years after the thinning, the tree will be capable of being supported by the growing roots, and the risk of damage caused by storms will decrease. Similarly, the stand at the border of a patch that has been subjected to regeneration felling is exposed to wind, because the trees have not adjusted to the windload at the open border. Consequently, the effect of tending measures on the risk is temporary but takes several years. Tending measures on a patch influence the risk of destruction of said patch and the risk of destruction of another patch in the nearby area.

The effect of adjacent areas on the risk of the patch can also be taken into account when the patch has, for example, cultural value and is possibly also conserved. Thus, it may be desired to keep the risk of destruction of the patch low in such a way that no measures that would increase the risk of destruction are taken in the nearby area.

Forest management can be considered a long-term process which involves, among other things,
- cultivation of soil,
- planting or sowing of trees,
- first thinning,
- repairing of possible damage,
- other thinning, and
- final cutting (regeneration felling).

At different stages of forest management, various technical measures are taken, including:
- removal of stumps,
- cultivation of soil (preventing the growth of weeds),
- fertilization of soil,
- planting of seedlings,
- felling of seedlings deviating from the main tree species,
- felling of trees,
- harvesting of fuel wood,
- pruning of trees,
- transportation of trunks, and
- transportation of logging waste, such as brushwood and stumps.

Forest management involves risks caused by said risk events. Taking the risks into account, it is possible to optimize the scheduling of the different tending measures. For example, in scheduling the felling, it is possible to utilize optimization of yield and risk. Correspondingly, the risk can be utilized in optimizing the equipment type. Furthermore, the risk can be utilized in routing the equipment and optimizing the quantity of equipment.

In determining the risk for the patch 200, it is possible to utilize data on forest resources. Data on forest resources refers to patch-specific data on the location and the stand of trees (wood) of the patch. The forest resource data is patch-specific. The forest resource data comprises at least the forest resource data components essential for each patch: the development class of the stand, and the surface area of the patch. On the basis of this essential forest resource data, it is possible to give a relatively accurate estimate on the risk of destruction of the stand, because from the development class of the stand it is possible to determine the risk probability for certain risk events, and the value of the stand. For each patch, it is also possible to determine other forest resource data components, such as the main tree species, the location of the patch, the volume of the stand, as well as other forest resource data components which will be presented later on. On a patch-specific basis, these parameters can be used to determine very accurately the value of the soil and the stand tied to the patch, as well as the risk of destruction of the stand on the patch, relating to each or a number of risk events.

The forest resource data may comprise at least said essential forest resource data components for each patch and the stand growing on it.

Furthermore, the forest resource data may also comprise other forest resource data components. The forest resource data component may be any of the following:
- the development stage (growth stage; seedling stand, production forest, forest mature for regeneration felling),
- the surface area of the patch,
- the main tree species (one or several),
- the use of the patch (conserved forest, production forest, recreational forest),
- the location of the patch (*e.g*. map or GPS coordinates),
- the soil of the patch (rock, wetland, hill, moorland),
- the topographic properties of the patch (slope, altitude from the sea level),
- the density of the stand,
- the age of the stand,
- the volume of the stand,
- the typical diameter of a tree (possibly diameters according to tree species),
- the percentage of saw timber,
- the return on investment,
- the value increment,
- the need for forest tending measures,
- the tending measures planned for the future,
- the risk events occurred in the forest,
- the risk probability for each risk event, and
- the interdependence of different risk events for the patch.

Hereinabove, the percentage of saw timber refers to the quantity of timber classified as saw timber in relation to the total quantity of the growing stock. Saw timber, in turn, refers to timber that meets the measurement and quality standards for saw timber. The measurements refer to the length and thickness measurements; the quality standards include, for example, straightness, branchiness and lack of decay. The return on investment refers to the growth of the stand as a percentage. The return on investment refers to the relative annual growth when the growth is measured by the volume measurement m³, which is proportioned to the volume of the stand. The value increment refers to the proportion of growing marketable timber of the total growth. The total growth also includes the branches, needles, top, and other parts of the trees which are not marketable or for which the sales price obtained is significantly lower than for saw timber. In a mature forest, the value increment is typically large.

Furthermore, it should be noted that some forest resource data components are dependent on each other. For example, on the basis of the development class and the main tree species in the stand, it is also possible to determine, for example, the age of the stand, the volume of the stand per area, as well as the percentage of saw timber, the return on investment, and the value increment at a relatively high accuracy. Furthermore, the accuracy of the risk estimate can be improved, for example, by taking the effect of the location of the patch into account.

The forest resource data can be automatically updated. For example, the age of the stand can be updated in time. The volume of the stand can be updated according to the growth percentage, for example annually. The tending measures taken and the events (damage) observed can be entered in a database of forest resource data, *i.e.* a forest resource database. If forestry plans are made by computer, the software for forestry planning may communicate with the forest resource database. The software for forestry planning can update the forest resource database. In this way, up-to-date forest resource data is available to the forest owner or forester.

Known methods can be utilized in collecting the forest resource data. The parameters are normally collected by professional foresters. For example, airborne laser scanning (ALS) can be used for automatically determining the stand on a patch. Aerial photographs can also be utilized in producing forest resource data. The data can be entered, imported in or transmitted to the database. The data may be available from the database. The data may be available to, for example, a user who receives forest resource data to determine a patch-specific risk.

Furthermore, forest resource data can be collected, for example, by walking on the forest property, on its different patches, and physically observing different forest resource data components. The collected forest resource data can be entered in a database. The data can be entered, for example, in a portable computer. The portable computer can transmit the data forward to an operator that manages the database, for example over a communications network. Alternatively or in addition, the user may actively forward the data, for example on a memory card.

The patches can be divided, if the stand on a single patch is to be managed in two different ways. Similar patches can be combined. For example after regeneration felling, the felled patches can be combined.

The forest resource data, *i.e.* at least one forest resource data component, can be utilized in determining the patch-specific risk. In an example, one forest resource data component is used for determining the patch-specific risk. Such a forest resource data component may be, for example, the surface area of the patch. In an advantageous example, two forest resource data components are used for determining the risk. The first forest resource data component may be, for example, the class of development of the stand on the patch, and the second one, for example, the surface area of the patch. In another advantageous example, three forest resource data components are used for determining the risk. These are the class of development, the surface area of the patch, and the main tree species. As stated above, the class of development of the stand is also represented by the age of the stand which can thus be applied instead of the class of development for determining the risk. In an example, four forest resource data components are used for determining the risk. In addition to those mentioned above, the location of the patch (for example, in the North-South direction) may be the fourth forest resource data component used. In an example, five forest resource data components are used for determining the risk. For example, in addition to the three components mentioned above, two of the following can be used: the location of the patch, the soil of the patch, a topographic property, the volume of the stand, the stage of growth, the percentage of saw timber, and the return on investment. For example, the soil or a topographic property may influence the probability of damage caused by fungi, whereas the volume, the percentage of saw timber, and the return on investment have an effect on the value of the forest. It is obvious that also other forest resource data can be used for determining the patch-specific risk. Furthermore, it is obvious that also more than five forest resource data components can be used for determining the patch-specific risk. The accuracy of the determined patch-specific risk will depend on the number of forest resource data components used. By using a number of forest resource data components for determining the risk, a more accurate estimate on the risk is obtained than by using few forest resource data components. It is obvious that for example the mere surface area cannot describe the risk very accurately, because the surface area does not tell anything about the growing stand. By using, for example, the above-mentioned two forest resource data components, the class of development of the stand and the surface area of the patch, the risk can be determined at a considerably higher accuracy.

The forest resource data can be used for determining the patch-specific risk either when the risk relates to a given risk event or when the risk refers to the total risk. For example, it can be assumed that the different risk events are statistically independent of each other. Thus, the total risk can be determined by determining the risk relating to each risk event and summing up the risks for the different risk events. It is also possible that different risk events are dependent on each other. Thus, for example, the risks for damage caused by storms and for damage caused by insects cannot be directly summed up, because the occurrence of damage by a storm will increase the quantity of fallen trees on the patch and thereby the risk for damage by insects. For example, more than 80 million cubic meters of timber was toppled by the Gudrun storm in Sweden, and a lot of damage was caused by insects during the following years.

The risk relating to a patch 200 and to a risk event can be determined, for example, in the following way:
- determining the patch to be examined,
- determining the risk event to be examined, and
- determining the risk relating to the risk event by utilizing forest resource data
   ○ on the patch to be examined and
   ○ on the areas adjacent to the patch to be examined.

In the technical sense, this means that if the risk probability of the risk event Aᵢ relating to the patch k is denoted with P(Aᵢ^{k}), then this probability is a function of the forest resource data on the patch k and the patches Iₘ in its nearby area, where m=1, 2, 3, ..., N, and N is the number of patches in the area adjacent to the patch k. With the above-mentioned denotation, the risk of a risk event i relating to the patch k, *i.e.* the expected value of the economic loss, is P(Aᵢ^{k})Mᵢ^{k}, where Mᵢ^{k} is the economic loss caused by the risk event Aᵢ on the patch k. The economic loss will be influenced by not only the decrease in the value of the forest but also the costs for repairing the damage, as well as possible sales returns obtained from harvesting of timber. Furthermore, the economic loss will be influenced by the present value of future growth. Moreover, the reduction in the value will be influenced by the quantity of timber destroyed by the risk event occurred on the patch. Risk events i and j being independent, the risk probability for the occurrence of at least one of them, P(Aᵢ^{k} tai Aⱼ^{k}), is known to be P(Aᵢ^{k})+P(Aⱼ^{k}), whereby the total risk caused by these two different events is P(Aᵢ^{k})Mᵢ^{k}+P(Aⱼ^{k})Mⱼ^{k}. This addition is presented above.

If the risk events are not independent, the risk probability for the occurrence of at least one of them, P(Aᵢ^{k} or Aⱼ^{k}), is known to be P(Aᵢ^{k})+P(Aⱼ^{k})-P(Aᵢ^{k} and Aⱼ^{k}). Thus, the total risk of these two events is P(Aᵢ^{k})Mᵢ^{k}+P(Aⱼ^{k})Mⱼ^{k}-Mᵢⱼ^{k}P(Aᵢ^{k} and Aⱼ^{k}). Here, Mᵢⱼ^{k} is the total cost caused by the events i and j. The total cost may be, for example, Mᵢ^{k}+Mⱼ^{k}, that is, the sum of the separate risk events. The risk event may also cause other costs than the decreases in the value relating to the destruction of the stand, for example costs for repairing and/or planting of trees. In the case of several damages occurring at the same time, it may be that the repairing costs are due for payment only once, wherein the joint costs for two events may be slightly lower than the sum of the costs for the separate events. In estimating the probability of the occurrence of two risk events, P(Aᵢ^{k} and Aⱼ^{k}), it is possible to apply the formula for conditional probability P(Aᵢ^{k} and Aⱼ^{k})=P(Aᵢ^{k}|Aⱼ^{k})P(Aⱼ^{k}). Here, the denotation P(Aᵢ^{k}|Aⱼ^{k}) refers to the probability of the risk event i on the patch k, if the event j is known to have occurred on the patch k. Aᵢ may refer to, for example, damage caused by insects, and Aⱼ to damage caused by a storm. Furthermore, the risk relating to the whole forest property 100 can be determined by summing up the patch-specific risks.

By means of the forest resource data, it is possible to determine the risk probability P(Aᵢ^{k}) and the risk P(Aᵢ^{k})Mᵢ^{k} by utilizing the forest resource data relating to the patch k and the patches I in its nearby area. With reference to Fig. 2, it is possible to examine, for example, the risk probability P(Aᵢ^{a}), when Aᵢ refers to damage caused by storms. For example, the risk probability P(Aᵢ^{a}) for the patch a can be influenced by the location (wind conditions) of the patch a, the soil of the patch a (susceptibility to windfalls, for example, on rocks), the main tree species (susceptibility to damage caused by insects or fungi), and/or the measures taken on the patch a (*e.g*. thinnings increase the risk of damage caused by storms). Futhermore, the risk probability P(Aᵢ^{a}) of the patch a may be influenced by tending measures, such as thinnings or final cuttings, carried out on the patches b, c, d, e, or f. Furthermore, the risk probability of the patch a may be influenced by the tree species or the soil of the patches b, c, d, e, or f, or the use of these areas as grasslands. The stand or forest land of the patches g and h in the nearby areas farther away may also influence the risk of the patch a. Further, the risk P(Aᵢ^{k})Mᵢ^{k} can be determined, when the cost Mᵢ^{k} of the risk event is known. The cost can also be determined on the basis of forest resource data. In particular, a decrease in the value of the stand can be determined by applying the age and the density of the stand.

Further, the forest resource data may be changed as tending measures are taken or risk events occur on the different patches. Moreover, the growth of the forest influences the forest resource data, *e.g*. the age, quantity and price of the stand. Thus, the forest resource data can be updated, wherein the corresponding risk can be recalculated.

Forest patches susceptible to destruction include
- growing stand after thinning,
- stands at the borders of large areas after clear cutting,
- spruce stands harmed by the fungus *Fomes annosus,*
- mature over-dense stands,
- stands with too small tops (susceptibility to damage by snow),
- stands where the tending of seedlings has been delayed, and
- seedling stands.

Valuable and profitable patches include
- stands after thinning, with value increment forthcoming, and
- patches ready for clear cutting.

In an embodiment, the method comprises:
- selecting a risk event to be examined,
- receiving forest resource data, and
- determining the risk relating to a patch on the basis of the forest resource data in a patch-specific way,
   for determining the risk of forest destruction, wherein the risk relates to said risk event, and the risk is determined for the patch.

In the method, it is possible to receive forest resource data from a database. Alternatively or in addition, forest resource data can be received directly or indirectly from a system for measuring forest resource data, such as an airborne laser scanning system or an aerial photography system.

In an embodiment of the method, the risk relating to a patch is determined on the basis of forest resource data in a patch-specific way by using at least two forest resource data components. In another embodiment, at least three forest resource data components are used.

The risk of destruction of the forest of the whole forest property 100, relating to a given risk event, can be determined by first determining the patch-specific risks relating to this risk event. The risk of destruction of the forest of the whole forest property 100 can be determined by applying the patch-specific risks relating to this risk event. The risk of destruction of the forest of the whole forest property 100, relating to a given risk event, can be determined, for example, by adding up the patch-specific risks relating to this risk event.

The risk of destruction of the stand of the whole forest property 100 can be determined by either one of the following methods:
1) by determining the patch-specific total risks first. In the patch-specific total risks, it is possible to take into account the different risk events and their interdependence or independence in the above described way. The risk of destruction of the stand of the whole forest property 100 can be determined by applying the patch-specific total risks. The risk of destruction of the stand of the whole forest property 100 can be determined, for example, by adding up the patch-specific total risks.
2) by determining the patch-specific risks relating to a given risk event first. The risk of destruction of the stand of the whole forest property 100, relating to this risk event, can be determined by applying the patch-specific risks. The risk of destruction of the stand of the whole forest property 100 can be determined, for example, by adding up the patch-specific total risks relating to a given risk event. The total risk can be determined by adding up the risks relating to the different risk events for the whole property.

In determining the risk for the whole forest property 100, it is possible to concentrate on the patches with a high risk of forest destruction. Such an evaluation can be carried out either on each risk event, on selected risk events, or on the total risk. It is possible to concentrate on, for example, the patches with a high risk of damage by a storm. Alternatively, it is possible to concentrate on, for example, the patches with a high risk of damage by a storm or by a forest fire. Alternatively, it is possible to concentrate on, for example, the patches with a high risk relating to all risk events.

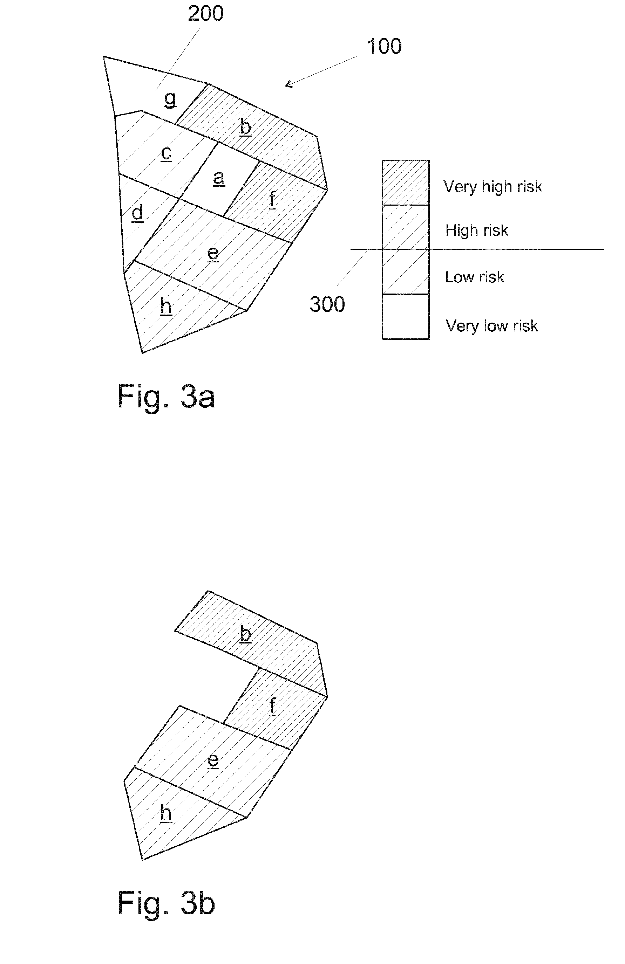

With reference to Fig. 3a, in concentrating on the patches 200 with a high risk, it is possible to select, for example, a risk threshold 300. The risk of a patch 200 of the forest property 100 is compared with the selected risk threshold 300. If the risk of the patch 200 of the forest property 100 is higher than the selected risk threshold 300, the risk of the patch 200 is taken into account. On the other hand, if the risk of the patch 200 of the forest property 100 is lower than or equal to the selected risk threshold 300, the risk of the first patch is disregarded. In the first case, the risk of the patch 200 is taken into account; that is, the risk used for the patch is, for example, the determined risk. In the latter case, the risk of the patch is disregarded; that is, the risk of the patch is not taken into account, wherein the patch can be considered to involve no risk. In the comparison, equality can be interpreted, according to the choice, as a patch either with or without a risk. Such a comparison can be implemented for a number, advantageously all of the patches 200 of the property 100. Thus, the risk of the property is determined by the patches with a high risk only. As stated above, the comparison can be implemented for a single risk event only, or for a number of risk events.

In Fig. 3a, the risk of the different patches 200 (a, b, c, ..., h) is illustrated by hatching. A dense hatch pattern denotes a high risk, and sparse hatch pattern denotes a low risk. The risk scale and the risk threshold 300 are shown as part of the figure. Patches a and g have a very low risk, patches c and d have a low risk, patches e and h have a high risk, and patches f and b have a very high risk. The risk threshold 300 is selected so that the patches with a low or very low risk are not taken into account in the risk management. Thus, in view of the risk management, only the patches h, e, f, and b of the forest property 100 are taken into account, *i.e.,* the area shown in Fig. 3b. Said area comprises the patches with a sufficiently high risk. As shown above, it is obvious that the risk shown in Fig. 3a may refer to the total risk of each patch, or a risk relating to a given risk event.

The risk threshold 300 may vary from patch to patch. For example, a general risk threshold can be selected so that only the patches 200 with a high risk are taken into account in determining the risk for the whole property 100. Furthermore, it is possible to select, for example, a threshold 0 for a given patch, wherein the risk of this particular patch is taken into account in the risk of the whole property 100, irrespective of whether the risk of this particular patch is higher than the general risk threshold or not. Furthermore, it is possible to separately select, for a given patch, *e.g*. a risk threshold that is higher than the highest determined patch-specific risk, wherein the risk of this particular patch is not taken into account in the risk of the whole property 100.

The patch-specific risk data can be used in at least one of the following:
- forest management,
- planning of cutting,
- optimization of the routing of forestry equipment,
- insurance of the forest, and
- determining the use of the forest (*e.g*. recreational or productional use).

Forest management can be planned by applying patch-specific risk data. It is possible, for example, that an old forest grows slowly. The annual yield from the growth of the old forest may even be lower than the risk of destruction of the forest. Thus, the risk determined for each patch can be utilized when drawing up a forestry plan and scheduling thinning or clear cutting. In the forest management, a yield reference value can be determined by using the expected yield for the stand on the patch 200 of the forest property 100. The yield reference value may be, for example, equal to the expected yield. The expected yield can be determined by means of the forest resource data described above. Said yield reference value can be compared with a reference value for the risk of destruction of the stand on the patch 200. The reference value for the risk of destruction may be, for example, equal to the risk of destruction. If the reference value for the risk of the patch 200 of the forest property 100 is higher than the yield reference value, forest tending measures can be taken on said patch 200. If the reference value for the risk of the patch 200 of the forest property 100 is lower than or equal to the yield reference value, the forest tending measures can be disregarded. Disregarding the forest tending measures refers to disregarding for some time, for example for a year or for five years. When the forest grows, its risk and thereby the risk reference value increase as well. In a corresponding manner, when the forest grows, its growth rate may decrease in an old forest. In a corresponding manner, it may be reasonable to take forest tending measures on the same patch later. Possible forest tending measures have been described above.

The forest management can be implemented, for example, in such a way that the expected yield (yield expectation) of the forest is used as said yield reference value, and the determined risk is used as the risk reference value. Thus, forest tending measures are taken on the patch exactly when the risk of the patch is higher than the expected yield of the patch.

As the yield reference value, it is also possible to use another value, for example a value slightly lower than the expected yield. As the risk reference value, it is possible to use a value that is slightly higher than the determined risk. For example, the risk reference value used can be the determined risk plus a relative risk margin p, where p is a percentage value, for example 0.3, *i.e.* 30%, wherein the risk reference value may be, for example, as described above, the determined risk multiplied by (1+p). In particular, the risk reference value used may be the insurance premium determined for the patch on the basis of the risk. Thus, forest tending measures are taken exactly when the insurance premium exceeds the expected yield. The insurance premium will be discussed in more detail hereinbelow.

The yield reference value may be, for example, the expected yield (yield expectation), or the yield expectation subtracted by a positive number, or the yield expectation multiplied by a number smaller than 1, or another number dependent on the yield expectation.

In another example, it is feasible that the risk-adjusted yield expectation should be at least the set yield target, where the yield target is defined in relation to the value of the forest or the forest land. The risk-adjusted yield expectation refers to the yield expectation subtracted by the risk or a risk reference value, such as an insurance premium. Thus, forest tending measures can be taken on the patch 200, for example, exactly when the yield expectation subtracted by the insurance premium and proportioned to the value of the forest land exceeds a selected threshold, for example 3%. Thus, forest tending measures are taken on the patch of the forest property exactly when the risk reference value for the patch 200 is greater than the yield reference value; in this example, the risk reference value is the insurance premium, and the yield reference value is the expected yield subtracted by a relative yield requirement (for example, pxA, where p is the relative yield requirement, such as 3%, *i.e.* 0.03, and A is the value of the forest land on the patch 200). Naturally, it should be noted that the relative yield requirement cannot be selected at random; in other words, even by tending, the forest cannot be made to yield more than is enabled by the growth conditions.

Yet another possibility is to look at the risk-adjusted yield or the risk-adjusted relative yield of the forest, and the development of this yield in time. It is possible to take tending measures exactly when the risk-adjusted yield expectation turns down. It is possible to take tending measures exactly when the risk-adjusted yield expectation proportioned to the capital turns down.

In addition or alternatively, patch-specific risk data can be used for the optimization of the location, quantity and type of forestry equipment. Moreover, patch-specific risk data can be used for routing the forestry equipment by planning an optimal route for repairing damages by utilizing the risk of forest destruction.

By means of patch-specific risk data, for example rescue authorities can estimate where destruction is most likely to occur and how large destruction is most likely to occur. Such data can be utilized on the province or county level for planning the quantity, type (fire-fighting equipment, reparation of damage caused by storm) and location of repair equipment.

By means of patch-specific risk data, for example electric companies can evaluate where destruction is most likely to occur and how large destruction is most likely to occur. Such data can be utilized, for example, in estimating the security of supply of electricity in different areas. Patch-specific risk data can be used to estimate the probabilities for breaking of power lines when it is known that the breaking is often caused by trees toppling down.

Patch-specific risk data can be used to estimate the magnitudes of risks. On the basis of the magnitudes of the risks, it is possible to estimate the quantity of the repair equipment needed. The equipment can be bought or sold when the risk changes. If the amount of equipment is suitable, the purchase and sales measures can be disregarded. It is possible, for example,
- to determine the optimal amount of forestry equipment by using at least the forest destruction risk of the first patch 200,
- to determine the real amount of forestry equipment,
- to compare the real amount of forestry equipment with the optimal amount of forestry equipment, and
- on the basis of the comparison, either
   o to purchase forestry equipment,
   o to sell forestry equipment, or
   o to disregard the measures of purchasing forestry equipment.

It is obvious that equipment can be sold and purchased if too much or too little is owned, respectively. In connection with or after the purchase or sales transaction, the purchased or sold equipment can be transported. Equipment can be transported, for example, to a location determined by the purchaser, or from a location determined by the vendor, or from a location determined by the vendor to a location determined by the purchaser.

Furthermore, the patch-specific risks can be used for determining the probability of natural destruction of varying extent. Thus, high risks can be better prepared for. For example, it is possible to estimate the required amount of forestry equipment owned by the forest owner in such a way that it is sufficient for repairing the risk damages in an average of four years out of five (or another ratio). In case greater risks are realized, the aim is to rely on equipment owned by other actors.

Furthermore, the defined risk can be utilized in the planning of repairing of the damages and in the routing of the forestry equipment. Because the repair measures are most probably taken on patches with a high risk, the route for repairing damages in the forest can be planned to pass through the patches with a high risk. For example, for windfalls in Finland, there is a law requiring that windfalls be collected and a corresponding area of forest land be forested, when the number of windfalls exceeds a threshold value. In Finland, this threshold value is 20 m³. Thus, the collecting can be planned to be implemented along such a route on which also risk events are most likely to have occurred or to occur, *i.e.* along such a route on which the risk of forest destruction is high. The equipment can be routed to travel along such a route. The equipment can be routed automatically, or the equipment can be routed by the forest machine driver. Such a route can be called an optimal route for repairing damages. With reference to Figs. 3a and 3b, for example damage occurring on the patch b can be repaired by moving along a route passing through the patches h, e and f instead of passing, for example, through the patch g. Thus, when moving to the patch b, it is possible to take forest tending measures on those patches which are passed through, and thereby to optimize the use of the equipment. For example, in the case of Fig. 3a, even if a forest truck road passed on the left side of the property 100 (for example, on the patches h, d, c, and g, or at their border), it may be economically rational to route the repair equipment to pass through the other patches. In a corresponding manner, if the property comprises two patches, it is possible to select, on the basis of the risks of the patches, whether to travel through the first patch or directly to the second patch. Thus
- an optimal route is determined for repairing damages, by using the risk of forest destruction of the first patch 200 and the risk of forest destruction of the second patch 200, and
- the forestry equipment is routed by using the determined optimal route for repairing damages.

In addition or alternatively, patch-specific risk data can be utilized in forest insurance. In view of insurance, it is not necessarily the total risk that is estimated but only risks relating to a given risk event or given risk events. These given risk events correspond to the events, for which the insurance is provided. Risk events to be insured may include, for example, one of the following:
- damage caused by fire only,
- damage caused by fire and storms only,
- damage caused by fire, storms, animals and insects only, and
- all forest damage.

In the first case, the risk event is, for example, a forest fire. In the second case, possible risk events are, for example, a forest fire and a storm. The total risk can be determined by means of the event "the forest is burning or a storm is destroying the stand". The total risk and its probability have been discussed above. In the third and fourth cases, the processing may proceed in a similar way.

The forest property 100 may comprise only one patch 200, wherein the risk for the forest property 100 can be determined by applying the risk of forest destruction on its sole patch 200. The forest property 100 may comprise at least two patches 200, a first patch and a second patch, wherein the risk of the forest property 100 can be determined by applying the risk of forest destruction of the first patch and the risk of forest destruction of the second patch. Normally, a forest property comprises several patches, for example eight patches in Figs. 2 and 3, and usually even more. The number of patches will depend on the size of the forest property; the typical size of a patch has been discussed above. The determination of the risk for the whole property 100 has been discussed above.

Also, in determining the risk for the insurance, not necessarily all the patches of the forest property 100 are taken into account, but part of the patches may be defined as having no risk. In a corresponding manner, such patches can be excluded from the insurance policy. The risk threshold 300 shown in Fig. 3a can also be utilized when determining the patches to be insured. For example, if only poorly productive wetland is located in the patch g of Fig. 3a, recently regenerated forest land is located in the patch a, and young growing forest 124 in the patches c and d, the risk for these patches is low. Thus, one may not necessarily want to insure these areas, and there is no need to look at the risk relating to them. In a corresponding manner, one may only insure the patches h, e, f, and b. As shown in Fig. 3a, the risk for these patches is high or very high. For example, mature growing forest 126 may grow on the patches e and h, and forest 128 mature to be regenerated may grow on the patches f and b. In insurance, the above mentioned risk, the risk based on the expected economic value of the damage, can be applied directly in determining the insurance premium. As the insurance premium, it is possible to determine said risk added by the margin of the insurer, which margin may be proportional to the risk. The margin may correspond to the above-described risk margin. An invoice can be created for the insurance premium. The invoice can be created by using the determined insurance premium. The invoice can be printed on paper. The invoice can be sent to the insured party or to another party responsible for the payment. The invoice may relate to insuring the forest for a given term, such as a year. After the term, the risk and the insurance premium can be redetermined in the above described manner. The insurance terms and conditions may include the terms for determining the premium.

The determined risk can also be utilized in determining the use of the forest. For example, if the risk of destruction of a production forest is high (and the insurance is thus expensive), the use of said forest can be changed to recreational use. In a corresponding manner, if production forest has been used as a recreational area, wherein a lot of paths have been formed in the forest and the risk of root decay of trees has increased especially on the paths, the production forest can be converted to a recreational forest.

The development of the risk in time can be forecast by simulating tending measures and growth. Typically, the risk increases as the forest grows, because the expected value of the quantity of timber to be destroyed increases. The risk probability may change as a result of tending measures, as described above. By simulations, it is also possible to look at the effect of a risk event on a given patch or other patches. The risk event on a given patch may decrease the risk of said patch. For example, if the stand on a given patch burns, the value of the remaining stand on said patch may be very low. Correspondingly, the risk probability for damage caused by storms or insects in the adjacent patches may increase, because the burnt forest does not protect from storms, and some insects thrive in the burnt forest.

Simulations can also be used to find out how tending measures influence the risk of destruction in nearby areas. It is possible that regeneration cutting on one patch increases the risk of destruction of the patches in the nearby areas of said patch so much that the risk-adjusted yield of the nearby area drops to a low level. Thus, in the way described above, a decision can be made on the tending measures on the patch or patches in the nearby area as well. In the method for estimating the risk of destruction, it is possible to apply forest resource data, where the effect of future events on the initial forest resource data is taken into account by means of simulations. Consequently, an embodiment of the method comprises:
- receiving initial forest resource data,
- simulating forest growth and/or tending by applying the initial forest resource data, wherein simulated forest resource data is generated, and
- determining the risk of forest destruction of a first patch 200 of a forest property 100 on the basis of said simulated forest resource data.

In the method for determining the risk, forest resource data is utilized. As said forest resource data, it is possible to use the initial forest resource data or simulated forest resource data. The risk can be determined by a computer program, for example in the above described way. The computer program comprises a program code. The computer program is configured, when run in a computer, to determining the risk of forest destruction of at least a first patch 200 of a forest property 100. The computer program is configured to receive forest resource data (initial or simulated). The computer program may be configured to receive forest resource data from a forest resource database. The computer program may be configured to generate simulated forest resource data on the basis of the initial forest resource data. The computer program may be configured to separately determine the risk probability of a risk event and the economic loss relating to the risk event. The computer program may be configured to separately determine the risk probabilities relating to different risk events. The computer program may be configured to separately determine the risks relating to different risk events. The computer program may be configured to determine the risk of forest destruction of a forest property 100 by applying the risk of forest destruction of at least the first patch 200 of the forest property 100. The computer program may be configured to determine an insurance premium in addition to the risk. The insurance premium may be, for example, the risk added by a risk margin. The risk is determined for each patch in the above described way. The insurance premium is based on the patch-specific risks.

The computer program may be transmitted to a client in the form of, for example, a computer software product. The computer software product comprises a storage means. The storage means comprises a non-volatile memory. The computer program may be stored on a storage means for a computer software product. Alternatively or in addition, an address in a data network may be stored on a storage means for a computer software product. The address may indicate a location in the data network where the computer program or part of it can be downloaded.

### Examples:

The following numbered examples illustrate some embodiments of the invention.
1. A method for determining the risk of forest destruction of at least a first patch (200) of a forest property (100), the method comprising
   - selecting a first risk event to be examined,
   - receiving forest resource data,
   - determining, on the basis of the forest resource data, the risk of forest destruction of the first patch (200) of the forest property (100), relating to the selected first risk event.
2. The method according to example 1, characterized by
   - determining, on the basis of the forest resource data, the risk of forest destruction of the first patch (200) of the forest property (100), relating to the selected first risk event, by applying at least two forest resource data components.
3. The method according to example 1 or 2, characterized in that
   - the forest resource data comprises forest resource data on not only the first patch (200) but also the nearby areas of the first patch (200), and that the method comprises
   - determining the risk of forest destruction of the first patch (200) of the forest property (100), relating to the selected first risk event, on the basis of the forest resource data on the first patch (200) and the forest resource data on the nearby area of the first patch (200).
4. The method according to any of the examples 1 to 3, characterized in that the method further comprises:
   - selecting a second risk event to be examined,
   - determining, on the basis of the forest resource data, the risk of forest destruction of the first patch (200) of the forest property (100), relating to the selected second risk event,
   - determining the risk of forest destruction of the first patch (200) by applying the risk of forest destruction of the first patch (200), relating to the selected first risk event, and the risk of forest destruction of the first patch (200), relating to the selected second risk event.
5. The method according to any of the examples 1 to 4, characterized by
   - determining forest resource data by at least one of the following methods: airborne laser scanning, aerial photography, physical observation by walking in a forest, and combinations of these, and
   - making the determined forest resource data available to a party that receives forest resource data.
6. The method according to any of the examples 1 to 5, characterized by
   - selecting a risk threshold (300),
   - comparing the risk of forest destruction of at least the first patch (200) of the forest property (100) with the selected threshold (300), and
   - if the risk of forest destruction of the first patch (200) of the forest property (100) is higher than the selected risk threshold (300), taking into account the risk of the first patch (200), and
   - if the risk of forest destruction of the first patch (200) of the forest property (100) is lower than or equal to the selected risk threshold (300), disregarding the risk of the first patch (200).
7. A method for determining the risk of forest destruction of a forest property (100), wherein the forest property (100) comprises at least a first and a second patch (200), characterized in that the method comprises
   - determining the risk of forest destruction of the first patch (200) according to any of the examples 1 to 6,
   - determining, on the basis of forest resource data, the risk of forest destruction of at least the second patch (200), relating to a first risk event, and
   - determining the risk of forest destruction of the forest property (100) by applying
      ○ the risk of forest destruction of the first patch (200) and
      ○ the risk of forest destruction of the second patch (200), relating to the first risk event.
8. The method according to the example 7, characterized in that the method further comprises:
   - selecting a second risk event to be examined,
   - determining, on the basis of forest resource data, for each patch, the risk of forest destruction of at least the second patch (200), relating to a second risk event, and
   - determining the risk of forest destruction of the forest property (100) by applying
      ○ the risk of forest destruction of the first patch (200),
      ○ the risk of forest destruction of the second patch (200), relating to the first risk event, and
      ○ the risk of forest destruction of the second patch (200), relating to the second risk event.
9. A method for determining the insurance premium for a forest property (100), wherein the forest property comprises a patch (200), characterized by
   - determining the risk of forest destruction of the patch (200) of the forest property (100) according to any of the examples 1 to 6, and
   - determining the insurance premium for the forest property (100) by applying the risk of forest destruction of the patch (200) of the forest property (100).
10. A method for determining the insurance premium for a forest property (100), wherein the forest property comprises at least a first patch (200) and a second patch (200), characterized by
   - determining the risk of forest destruction of the forest property (100) according to the example 7 or 8, and
   - determining the insurance premium for the forest property (100) by applying the risk of forest destruction of the forest property (100).
11. A method for forest management, characterized by
   - determining the risk of forest destruction of a first patch (200) of a forest property (100) according to any of the examples 1 to 6,
   - determining a risk reference value by applying the risk of forest destruction of the first patch (200) of the forest property (100),
   - determining the expected yield of said first patch (200) by applying forest resource data,
   - determining a yield reference value by applying the expected yield of the first patch (200),
   - comparing said risk reference value with said yield reference value, and
   - on the basis of the comparison, either taking forest tending measures on said first patch (200) or omitting the forest tending measures.
12. The forestry method according to example 11, characterized in that when taking the forest tending measures, at least one of the following is carried out:
   - removal of stumps,
   - cultivation of soil,
   - fertilizing of soil,
   - planting of seedlings,
   - felling of seedlings deviating from the main tree species,
   - felling of trees,
   - harvesting of fuel wood,
   - transportation of trunks, and
   - transportation of logging waste.
13. A method for routing forestry equipment, characterized by
   - determining the risk of forest destruction of the forest property (100) according to the example 7 or 8,
   - determining an optimal route for the forestry equipment for repairing damages, by applying the risk of forest destruction of the first patch (200) and the risk of forest destruction of the second patch (200), and
   - routing the forestry equipment by using the determined optimal route for repairing damages.
14. A method for optimizing the quantity of forestry equipment, characterized by
   - determining the risk of forest destruction of the forest property (100) according to any of the examples 1 to 8,
   - determining the optimal amount of forestry equipment by using at least the risk of forest destruction of the first patch (200),
   - determining the real amount of forestry equipment,
   - comparing the real amount of forestry equipment with the optimal amount of forestry equipment, and
   - on the basis of the comparison, either
      ○ purchasing and transporting forestry equipment,
      ○ selling and transporting forestry equipment, or
      ○ omitting the measures of purchasing forestry equipment.
15. A computer program comprising a program code, characterized in that the computer program is configured, when run in a computer, to execute the method according to any of the examples 1 to 10.
16. A computer software product, characterized in that the computer software product comprises
   - a storage means which comprises a non-volatile memory and whose content is readable by a computer, and
   - the storage means comprises a computer program according to the example 15.

## Claims

1. A method for determining the risk of forest destruction of a forest property (100), wherein the forest property (100) comprises at least a first patch (200) and a second patch (200), the method comprising
- collecting forest resource data by at least one of the following methods:
○ by airborne laser scanning,
○ by aerial photography, or
○ by observing and entering in a database,
- selecting a first risk event to be examined,
- determining, on the basis of the forest resource data, the risk of forest destruction of the first patch (200), relating to the selected first risk event,
- determining, on the basis of forest resource data, the risk of forest destruction of the second patch (200), relating to the first risk event, and
- determining the risk of forest destruction of the forest property (100) by applying
○ the risk of forest destruction of the first patch (200) and
○ the risk of forest destruction of the second patch (200).

2. The method according to claim 1, **characterized by**
- determining, on the basis of the forest resource data, the risk of forest destruction of the first patch (200) of the forest property (100), relating to the selected first risk event, by applying at least two forest resource data components.

3. The method according to claim 1 or 2, **characterized in that**
- the forest resource data comprises forest resource data on not only
the first patch (200) but also the nearby areas of the first patch (200), and that the method comprises
- determining the risk of forest destruction of the first patch (200) of the forest property (100), relating to the selected first risk event, on the basis of the forest resource data on the first patch (200) and the forest resource data on the nearby area of the first patch (200).

4. The method according to any of the claims 1 to 3, **characterized in that** the method further comprises:
- selecting a second risk event to be examined,
- determining, on the basis of the forest resource data, the risk of forest destruction of the first patch (200) of the forest property (100), relating to the selected second risk event,
- determining the risk of forest destruction of the first patch (200) by applying the risk of forest destruction of the first patch (200), relating to the selected first risk event, and the risk of forest destruction of the first patch (200), relating to the selected second risk event.

5. The method according to claim 4, **characterized in that** the method also comprises:
- determining, on the basis of forest resource data, for each patch, the risk of forest destruction of at least the second patch (200), relating to a second risk event, and
- determining the risk of forest destruction of the forest property (100) by applying
○ the risk of forest destruction of the first patch (200),
○ the risk of forest destruction of the second patch (200), relating to the first risk event, and
○ the risk of forest destruction of the second patch (200), relating to the second risk event.

6. The method according to any of the claims 1 to 5, **characterized in**
- selecting a risk threshold (300),
- comparing the risk of forest destruction of at least the first patch (200) of the forest property (100) with the selected threshold (300), and
- if the risk of forest destruction of the first patch (200) of the forest property (100) is higher than the selected risk threshold (300), taking into account the risk of the first patch (200), and
- if the risk of forest destruction of the first patch (200) of the forest property (100) is lower than or equal to the selected risk threshold (300), disregarding the risk of the first patch (200).

7. The method according to any of the claims 1 to 6, **characterized in that** at least the stand on the first patch (200) is more homogeneous than the stand on the whole forest property (100).

8. The method according to any of the claims 1 to 7, **characterized in that**
- at least the first patch (200) has the size of 0.5 to 2.5 ha.

9. A method for determining the insurance premium for a forest property (100), wherein the forest property comprises at least a first patch (200) and a second patch (200), **characterized by**
- determining the risk of forest destruction of the forest property (100) according to any of the claims 1 to 8, and
- determining the insurance premium for the forest property (100) by applying the risk of forest destruction of the forest property (100).

10. A method for forest management, **characterized by**
- determining the risk of forest destruction of the forest property (100) according to any of the claims 1 to 8, the method comprising
- determining, on the basis of the forest resource data, the risk of forest destruction of the first patch (200), relating to the selected first risk event,
- determining a risk reference value by applying the risk of forest destruction of the first patch (200) of the forest property (100),
- determining the expected yield of said first patch (200) by applying forest resource data,
- determining a yield reference value by applying the expected yield of the first patch (200),
- comparing said risk reference value with said yield reference value, and
- on the basis of the comparison, either taking forest tending measures on said first patch (200) or omitting the forest tending measures.

11. The method for forest management according to example 10, **characterized in that** when taking the forest tending measures, at least one of the following is carried out:
- removal of stumps,
- cultivation of soil,
- fertilizing of soil,
- planting of seedlings,
- felling of seedlings deviating from the main tree species,
- felling of trees,
- harvesting of fuel wood,
- transportation of trunks, and
- transportation of logging waste.

12. A method for routing forestry equipment, **characterized by**
- determining the risk of forest destruction of the forest property (100) according to any of the claims 1 to 8,
- determining an optimal route for the forestry equipment for repairing damages, by applying the risk of forest destruction of the first patch (200) and the risk of forest destruction of the second patch (200), and
- routing the forestry equipment by using the determined optimal route for repairing damages.

13. A method for optimizing the quantity of forestry equipment, **characterized by**
- determining the risk of forest destruction of the forest property (100) according to any of the claims 1 to 8,
- determining the optimal amount of forestry equipment by applying the risk of forest destruction of the forest property (100),
- determining the real amount of forestry equipment,
- comparing the real amount of forestry equipment with the optimal amount of forestry equipment, and
- on the basis of the comparison, either
○ purchasing and transporting forestry equipment,
○ selling and transporting forestry equipment, or
○ omitting the measures of purchasing forestry equipment.

14. A computer program comprising a program code, **characterized in that** the computer program is configured, when run in a computer, to execute the method according to any of the claims 1 to 8.

15. A computer software product, **characterized in that** the computer software product comprises
- a storage means which comprises a non-volatile memory and whose content is readable by a computer, and
- the storage means comprising a computer program according to the claim 14.
